# EUROPEAN PATENT SPECIFICATION

(11) **EP 2 610 173 B1**
(45) Date of publication and mention of the grant of the patent: **05.10.2016**
(21) Application number: 11819588.2
(22) Date of filing: 23.08.2011
(51) Int. Cl.: B64C 27/10, B64C 27/52, B64C 39/02, B64C 25/52

(54) **FIXED-PITCH COAXIAL CONTRA-ROTATING HELICOPTER**
KOAXIAL-GEGENDREHUNGSHELIKOPTER MIT FESTEM ROTOR
HÉLICOPTÈRE CONTRAROTATIF COAXIAL À PAS FIXE

(30) Priority: 24.08.2010 JP 2010187131
(43) Date of publication of application: 03.07.2013
(73) Proprietor: Gen Corporation, Matsumoto-shi, Nagano 399-0033 (JP)
(72) Inventor: YOKOYAMA, Yasutoshi, Matsumoto-shi, Nagano 399-0033 (JP)
(74) Representative: Wagner, Frank
(86) International application number: PCT/JP2011/004681
(87) International publication number: WO 2012/026112

(56) References cited:
- DE-A1- 10 203 504
- JP-A- S59 501 202
- JP-A- 2000 072 095
- JP-A- 2001 039 397
- JP-A- 2006 193 027
- JP-A- 2006 193 027
- JP-A- 2009 137 319
- JP-A- 2009 137 319
- US-A- 2 156 334
- US-A- 2 486 059
- US-A1- 2010 001 120
- US-B1- 6 293 492

## Description

### TECFINICAL FIELD

The present invention relates to a fixed-pitch coaxial contra-rotating helicopter in which two rotors disposed one above the other rotate in opposite directions about a common axis of rotation. In more detail, the invention relates to a fixed-pitch coaxial contra-rotating helicopter that can be maneuvered with a minimum of operation force, and that can maintain a stable flight attitude free from significant vibration.

### BACKGROUND ART

In a fixed-pitch coaxial contra-rotating helicopter, two identically shaped rotors that rotate in mutually opposite directions are disposed one above the other, whereby the torque of one rotor is negated by that of the other, and obviating the need for a tail rotor. The overall dimensions can thereby be reduced, making the design suitable for use in single-passenger or other such small-sized helicopters, or in small-sized helicopters of radio-operated design employed for spraying chemical agents and the like. In helicopters of this type, thrust is obtained by tilting the plane of rotation of the blades of the rotors with respect to the horizontal plane, while yaw control can be performed by creating a rotation speed differential between the two rotors.

In Patent Document 1 (JP2009-137319), the applicant proposed a single-passenger, small-sized helicopter that is easy to use. In the small-sized helicopter disclosed in Patent Document 1, a lower airframe provided with a seat portion is hung, via a lateral pivot mechanism and a longitudinal pivot mechanism provided with slide rails of arcuate shape, from a drive section provided with two rotors. By operating an operation stick longitudinally and laterally while seated in the seat, the pilot can angle the two rotors longitudinally and laterally, and thereby fly in the intended direction.

The operation mechanism of this small-sized helicopter is provided with a longitudinal pivot mechanism hung from the bottom surface of the drive unit on the rotor side, a lateral pivot mechanism hung from this longitudinal pivot mechanism, and an operation stick affixed to the bottom surface of the drive unit. The longitudinal pivot mechanism is provided with a guide rail of arcuate shape attached to the bottom surface of the drive unit and extending in the longitudinal direction, and the lateral pivot mechanism hangs in a pivotable state in the longitudinal direction along this guide rail. The lateral pivot mechanism is provided with a guide rail of arcuate shape hung from the longitudinal pivot mechanism and extending in the lateral direction, and the lower airframe (a pipe frame provided with a seat portion) hangs a pivotable state in the lateral direction along this guide rail.

The operation mechanism is moreover equipped with an operation assist unit for simple operation using a minimum of operation force. The design of the operation assist unit is such that a drive unit, which is provided with rotors and a drive section therefor, slides in such a way as to align the center of lift by the rotors with the center of gravity of the helicopter.

[Patent Document 1] Japanese Laid-Open Patent Application 2009-137319

### DISCLOSURE OF THE INVENTION

### PROBLEMS TO BE SOLVED BY THE INVENTION

In the small-sized helicopter proposed in Patent Document 1, the lower airframe hangs, via the longitudinal pivot mechanism and the lateral pivot mechanism, from the drive unit on the rotor side, making the lower airframe susceptible to swinging in the longitudinal direction due to the effects of a crosswind or the like. For this reason, hovering at a stable attitude cannot be performed in the case of strong winds or the like. Moreover, as it is necessary to minimize longitudinal and lateral vibration and rocking, it is difficult to maintain a stable flight attitude at a minimum of operation force, resulting in the problem of a lack of attitude stability. Further, even in cases in which the operation assist unit slides the drive unit on the rotor side, there are cases in which the lower airframe rocks longitudinally and laterally, making it difficult to form a stable flight attitude at a minimum of operation force within a short time span.

An object of the present invention is to propose a fixed-pitch coaxial contra-rotating helicopter that minimizes vibration and rocking of the airframe, affording excellent attitude stability.

### MEANS TO SOLVE THE PROBLEMS

In order to solve the above-mentioned problem, according to the present invention there is provided a fixed-pitch coaxial contra-rotating helicopter, characterized by having:
a rotor drive unit provided with an upper rotor and a lower rotor rotatable in opposite directions about a common axis of rotation;
a slide unit attached to the bottom surface of the rotor drive unit for sliding the rotor drive unit in an orthogonal plane direction orthogonal to the axis of rotation;
a lower airframe hung from the bottom surface of the slide unit via a pivot joint;
at least two extensible links bridging the lower airframe and the bottom surface of the rotor drive unit or of the slide unit;
detectors attached to the links for detecting the amount of extension of the links; and
a control circuit for controlling the direction of slide and the amount of slide of the rotor drive unit by the slide unit, on the basis of detection output from the detectors; wherein
on the basis of the amount of extension of the links detected by the detectors, in a case in which the rotor drive unit tilts about the pivot joint with respect to the direction of the center of gravity of the lower airframe, the control circuit slides the rotor drive unit in the direction in which the rotor drive unit is tilted, such that a perpendicular that passes through the center of gravity of the lower airframe aligns with a perpendicular that passes through the center of thrust generated by the rotation of the upper rotor and the lower rotor.

In the helicopter according to the present invention, the rotor drive unit inclines about the pivot joint with respect to the lower airframe. As the rotor drive unit tilts with respect to the lower airframe, the links extend and contract in association therewith, and the direction of tilt and angle of tilt of the rotor drive unit are ascertained on the basis of the amount of extension detected by the detectors. The slide unit slides the rotor drive unit in the detected direction of tilt, by a distance corresponding to the detected angle of tilt. As a result, where the original axis of rotor rotation of the rotor drive unit is viewed as the center, the lower airframe moves with respect to the rotor drive unit, in a manner just as if the lower airframe were linked via a gimbal of freely variable curvature. Through such movement, vibration and rocking of the lower airframe can be minimized, and the rotor drive unit can be held in a tilted attitude with a minimum of operation force. Therefore, the attitude can be stabilized during hovering and during flying.

In the case of a manned helicopter, optionally, an operation stick is attached to the rotor drive unit or to the slide unit, the operation stick being operated to tilt the rotor drive unit about the pivot joint with respect to the direction of the center of gravity of the lower airframe.

When the operation stick is operated, the rotor drive unit tilts, tilting the two rotors. As a result, the plane of rotation of the rotors tilts, generating thrust towards the direction of tilt, thereby moving the helicopter in the direction of tilt.

In this case, in preferred practice, a detector is disposed for detecting the operation force acting on the operation stick, and the slide unit slides the rotor drive unit in such a manner that the value detected by the detector is equal to or less than a predetermined value. In so doing, the operation force necessary to operate the operation stick can always be kept at or below a given strength.

Next, in the case of an unmanned, radio-operated helicopter, optionally, the lower airframe and the rotor drive unit or the slide unit are linked by at least two extensible actuators disposed in a state surrounding the pivot joint, each of the extensible actuators being individually extended and contracted, thereby tilting the rotor drive unit about the pivot joint with respect to the direction of the center of gravity of the lower airframe.

In this case as well, the slide unit slides the rotor drive unit on the basis of the respective amount of extension of the extensible actuators. Specifically, as the direction of tilt and the angle of tilt of the rotor drive unit are determined on the basis of the amount of extension or contraction of the extensible actuators, the rotor drive unit can slide on the basis thereof to align the center of gravity on the lower airframe side with the center of lift on the rotor drive unit side. In so doing, the load on the extensible actuators can be reduced, which provides the advantage of smaller size of the extensible actuators.

### BRIEF DESCRIPTION OF THE DRAWINGS

FIG. 1 is a descriptive view showing the overall constitution of a single-passenger helicopter according to a first embodiment of the present invention;
FIG. 2 is a descriptive view showing the planar disposition of the rotor drive unit of the helicopter of FIG. 1;
FIG. 3 is a simplified side view showing the rotor drive unit and the slide unit of the helicopter of FIG. 1;
FIG. 4 is a partial longitudinal cross-sectional view showing the rotor drive unit of FIG. 1;
FIG. 5 is a descriptive view of the behavior of the operation mechanism of the helicopter of FIG. 1; and
FIG. 6 is a descriptive view showing the overall constitution of an unmanned helicopter according to a second embodiment of the present invention.

### BEST MODE FOR CARRYING OUT THE INVENTION

The embodiments of the fixed-pitch coaxial contra-rotating helicopter to which the present invention is applied are described below with reference to the drawings.

### [First embodiment]

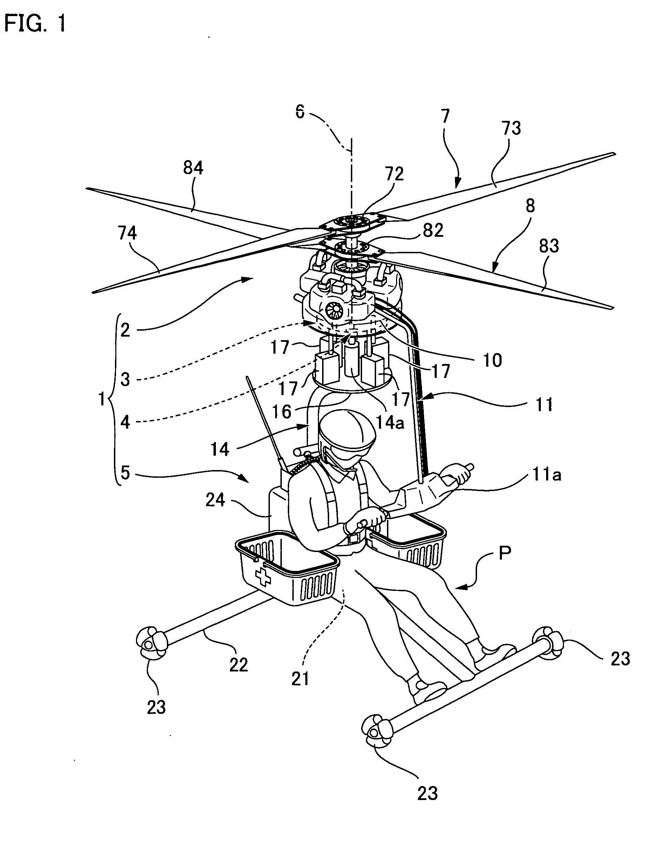

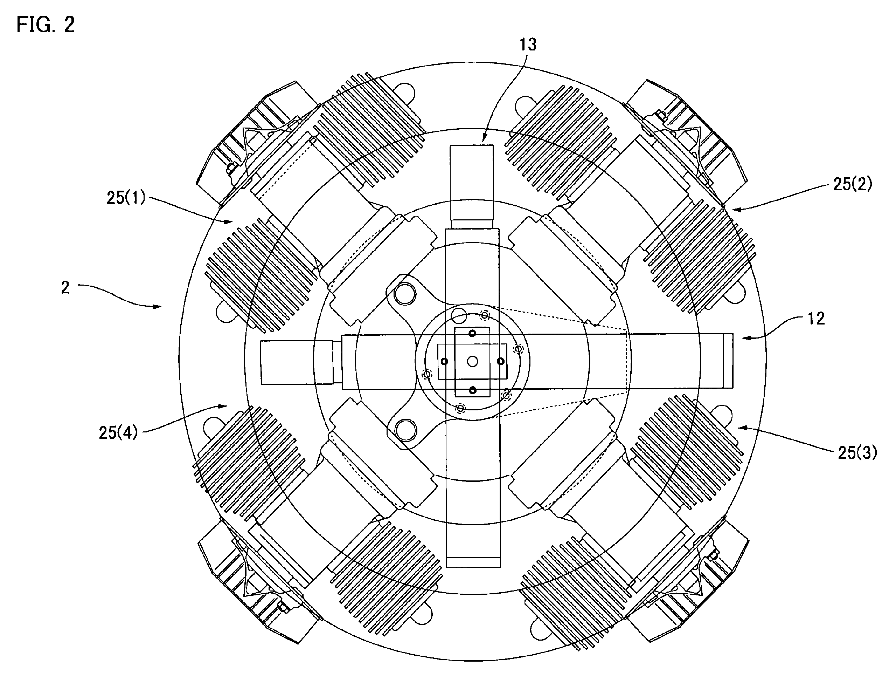

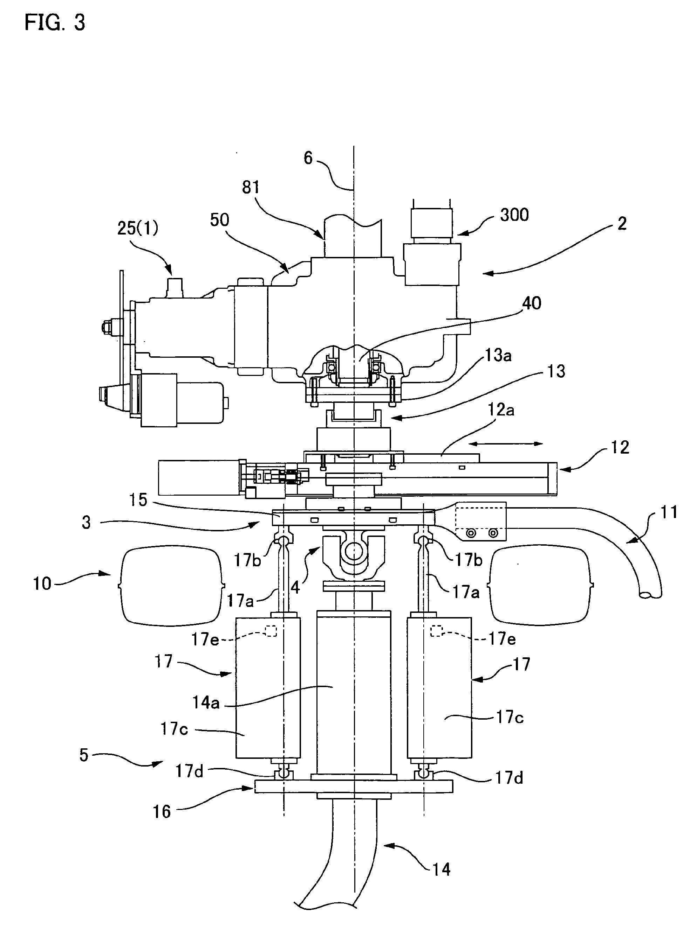

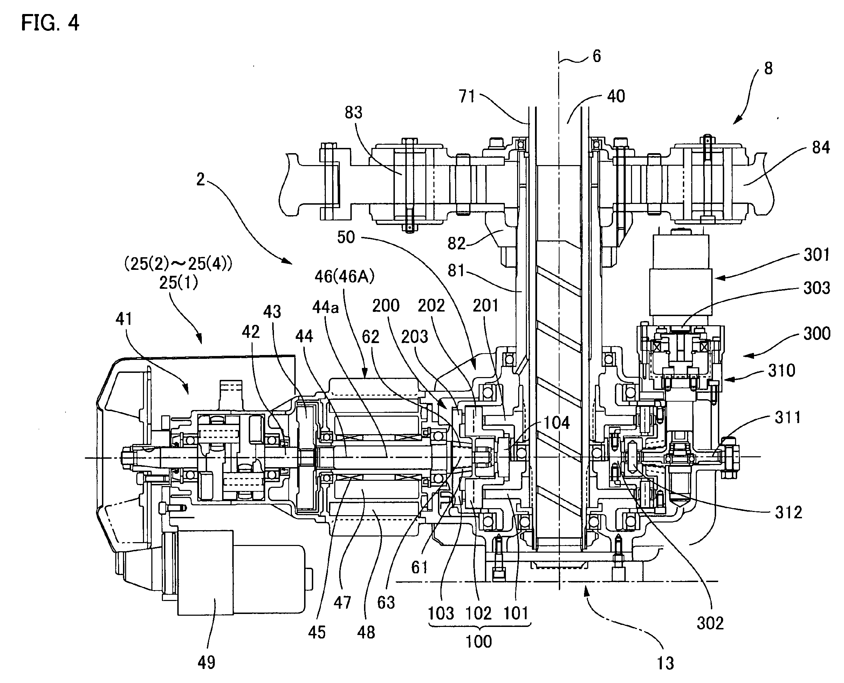

FIG. 1 is a descriptive view showing the overall constitution of a single-passenger helicopter according to a first embodiment of the present invention; FIG. 2 is a descriptive view showing the planar disposition of the rotor drive unit of the helicopter; FIG. 3 is a simplified side view showing the rotor drive unit and the slide unit of the helicopter; and FIG. 4 is a partial longitudinal cross-sectional view showing the rotor drive unit.

### (Overall constitution)

The overall constitution of the single-passenger helicopter according to a first embodiment is described with reference to FIGS. 1, 2, and 3. The helicopter 1 has a rotor drive unit 2 for driving rotation of an upper rotor 7 and a lower rotor 8; a slide unit 3 attached to the bottom surface of the rotor drive unit 2; and a lower airframe 5 hung from the bottom surface of the slide unit 3 via a pivot joint 4. The upper rotor 7 and the lower rotor 8 rotate in opposite directions about an axis of rotation 6. A ring-shaped muffler 10 is attached to the bottom side of the slide unit 3.

An operation stick 11 made of metal is attached to the slide unit 3, which is in turn attached to the bottom surface of the rotor drive unit 2. The operation stick 11 is a substantially "L" shaped stick that extends frontward on the horizontal from the end of the slide unit 3 at the helicopter front surface side thereof, and subsequently bends and extends downward. On the slide unit 3 are mounted a longitudinal slide unit 12 and a lateral slide unit 13 for sliding the rotor drive unit 2 in an orthogonal plane direction orthogonal to the axis of rotation 6, in a relative manner with respect to the lower airframe 5.

As shown in FIGS. 2 and 3, the longitudinal slide unit 12 is disposed in the helicopter longitudinal direction (the direction in which the operation stick 11 is positioned). The lateral slide unit 13 is mounted on a longitudinal slider 12a of the longitudinal slide unit 12, and extends in the helicopter lateral direction orthogonal thereto. A lateral slider 13a of the lateral slide unit 13 is attached to the bottom surface of the rotor drive unit 2. Optionally, the longitudinal slide unit 12 is mounted on the lateral slide unit 13, and the longitudinal slide unit 12 attached to the bottom surface of the rotor drive unit 2.

Meanwhile, as shown in FIGS. 1 and 3, the lower airframe 5 is constituted at its center by a metal pipe frame 14 extending in the vertical direction. An upper end portion 14a of the pipe frame 14 is linked, via the pivot joint 4 (universal joint), to the center portion of the bottom surface of a base plate 15 of the slide unit 3. The upper end portion 14a and the pivot joint 4 are disposed such that the center and the center of pivoting are aligned on an extension line of the axis of rotation 6 at the initial position.

A disk-shaped flange 16 is affixed on the horizontal to the upper end portion 14a of the pipe frame 14, in a region thereof a given distance away to the bottom side from the base plate 15. The base plate 15 and the disk-shaped flange 16 are bridged by three or more extensible links at equiangular intervals about the pivot joint 4. In the present example, four extensible links 17 extending in the vertical direction are disposed at 90-degree angular intervals on the same circle. Bridging by two links 17 that are disposed at angles of less than 180 degrees, for example, at angles of 90 degrees, about the pivot joint 4, is acceptable as well. The upper end portion of an extensible rod 17a of each of the extensible links 17 is linked to the base plate 15 via a ball joint 17b, while the lower end portion of an stationary-side housing 17c of each of the extensible links 17 is analogously linked via a ball joint 17d to the disk-shaped flange 16, at a position on an extension line of the center axis of the extensible rod 17a. A detector 17e for detecting the amount of extension of the extensible rod 17a is housed inside each of the extensible links 17.

When the operation stick 11 is operated, tilting the rotor drive unit 2 frontward about the pivot joint 4, the links 17 that are positioned to the front and back with the pivot joint 4 therebetween contract and extend, respectively. When the rotor drive unit 2 tilts laterally, the left and right links 17 extend or contract. Consequently, the direction of tilt and the angle of tilt of the rotor drive unit 2 may be ascertained on the basis of the extension amount of the four links 17.

As shown in FIG. 1, a seat portion 21 is attached to the bottom side section of the pipe frame 14. A region of the pipe frame 14 to the lower side of the seat portion 21 constitutes a stand section 22 spreading out in a trifurcate shape, for example, with wheels 23 being attached to the bottom end of the stand section 22. A fuel tank 24 is attached in a region to the back side of the seat portion 21 in the stand section 22. An operation rod section 11 a at the bottom end of the operation stick 11 is positioned at a height permitting operation by a pilot P seated in the seat portion 21.

Next, the upper and lower rotors 7, 8 of the rotor drive unit 2 are described with reference to FIGS. 1 and 4. The lower rotor 8 is provided with a hollow rotor shaft 81, a rotor hub 82 fixed to the outside peripheral face of the rotor shaft 81, and a pair of blades 83, 84 supported on the rotor hub 82 via a hinge mechanism. The upper rotor 7 is analogous in structure, being provided with a hollow rotor shaft 71, a rotor hub 72 fixed to the outside peripheral face of the rotor shaft 71 (see FIG. 1), and a pair of blades 73, 74 supported on the rotor hub 72 via a hinge mechanism (see FIG. 1). The rotor shaft 71 of the upper rotor 7 is rotatably supported by a hollow vertical shaft 40 disposed in a state of concentricity to the inside thereof, and the rotor shaft 81 of the lower rotor 8 is rotatably supported in a state of concentricity to the outside periphery of the rotor shaft 71 of the upper rotor 7.

The internal structure of the rotor drive unit 2 is described with reference to FIGS. 2 and 4. The rotor drive unit 2 is provided with an engine unit 25, and with a drive power transmission mechanism 50 for transmitting rotational drive power output therefrom, to the rotor shafts 71 and 81 in the form of uniform-velocity rotation in opposite directions. In the present example, the engine unit 25 is provided with four engine units 25(1) to 25(4) arranged in a radial pattern at 90-degree angular spacing, as may be ascertained from FIG. 2 (hereinafter, these are collectively referred to as the engine unit 25). Each of the engine units 25(1) to 25(4) is respectively linked to the common drive power transmission mechanism 50 via a clutch mechanism. It is possible for the engine and clutch mechanism of each of the engine units 25(1) to 25(4) to be driven separately and independently. Consequently, in a case in which, for example, one of the engines has stopped due to a malfunction or the like, flight can continue unimpaired. The basic structure of each of the engine units 25(1) to 25(4) is the same, being provided with a two-cylinder engine body 41, a rotating output shaft 44 linked coaxially via a clutch mechanism 43 to a crankshaft 42 of the engine body 41, and a starter motor 49, as shown in FIG. 4.

Of the four engine units, two of the engine units 25(1) and 25(2) have backup electric motors 46 of hollow profile attached to the rotating output shafts 44 thereof via a one-way clutch 45. The backup electric motor 46 is provided with a motor rotor 47 of hollow cylindrical shape linked in a coaxial state to the rotating output shaft 44, with the one-way clutch 45 therebetween; and a motor stator 48 provided with a plurality of salient poles facing across a given gap towards the circular outside peripheral face of the motor rotor 47. With the rotating output shaft 44 in a state of rotation driven by the engine body 41, the motor rotor 47 of the backup electric motor 46 is held in a substantially halted state through the action of the one-way clutch 45. With the engine in the halted state, when the backup electric motor 46 is energized and the backup electric motor 46 is driven, rotation of the motor rotor 47 thereof is transmitted to the rotating output shaft 44 via the one-way clutch 45, thereby making it possible to rotate the rotating output shaft 44.

The remaining two engine units 25(3) and 25(4) have generators 46A of hollow profile attached in a coaxial state to the rotating output shafts 44 thereof. The generators 46A generate power through rotation of the rotating output shaft 44, the power generated thereby being used to charge a capacitor, not shown. The capacitor is employed as a backup power supply for driving the backup electric motors 46.

The numbers of backup electric motors 46 and generators 46A are not limited to two each. For example, it would be acceptable to attach backup electric motors 46 to three of the engine units, and to attach a generator 46A to the remaining one engine unit. It is of course possible for the number of engine units to be other than four.

In the present example, during an emergency descent, the altitude is measured with an altitude sensor or the like, not shown; and once the height above the landing point reaches a predetermined height, for example, a height of about 5 m, the backup electric motors 46 are started up, driving the rotating output shafts 44. In so doing, the shock of an emergency descent and landing can be moderated. The backup electric motors 46 may be small-sized ones of about 30 HP, for example. As the motors are for emergency purposes, driving time on the order of several seconds is acceptable.

Next, the drive power transmission mechanism 50 is provided with a first planetary gear mechanism 100 disposed at the lower side, and a second planetary gear mechanism 200 disposed at the upper side. The first planetary gear mechanism 100 is provided with a sun gear 101 that is splined in a coaxial state to the outside peripheral face of the rotor shaft 71 of the upper rotor 7; a plurality of planetary gears 102 that mesh with the sun gear 101; and an internal gear 103 that meshes with each of the planetary gears 102. Analogously, the second planetary gear mechanism 200 is provided with a sun gear 201 that is splined to the outside peripheral face of the rotor shaft 81 of the lower rotor 8; a plurality of planetary gears 202 that mesh with the sun gear 201; and an internal gear 203 that meshes with each of the planetary gears 202.

The carrier that supports the planetary gears 102, 202 of the planetary gear mechanisms 100 and 200 is a common carrier 104 of hollow cylindrical shape, at the upper end side of which are rotatably supported the planetary gears 202 of the second planetary gear mechanism 200, and at the lower end side of which are rotatably supported the planetary gears 102 of the first planetary gear mechanism 100.

Crown gears 61, 62 are respectively fastened to, or formed integrally with, the upper annular end face of the internal gear 103 and the lower annular end face of the internal gear 203, the upper/lower pair of crown gears 61, 62 meshing with a drive pinion 63 formed at the inside shaft end of each rotating output shaft 44. The rotation axis 44a of the drive pinion 63 extends in a direction orthogonal to the rotation axis 6 of the rotors 7, 8 (the center axis of the vertical shaft 40).

The drive power transmission behavior of the drive power transmission mechanism 50 is now described. When the drive pinion 63 at the distal end of each rotating output shaft 44 is driven and rotated, through the agency of the crown gears 61, 62 that mesh therewith, the internal gears 103, 203 rotate at uniform velocity in opposite directions about the axis of rotation 6. Rotation of the internal gears 103, 203 is transmitted respectively to the sun gears 101, 201 via the planetary gears 102, 202 which are rotatably supported by the common carrier 104. Consequently, the rotary shaft 71 of the upper rotor 7 which is linked to the sun gear 101, and the rotary shaft 81 of the lower rotor 8 which is linked to the sun gear 201, rotate at uniform velocity in opposite directions. In so doing, during normal running, the upper and lower rotors 7, 8 rotate at uniform velocity in opposite directions.

Next, the rotor drive unit 2 is provided with a yaw control mechanism 300. The yaw control mechanism 300 is a differential rotation-generating mechanism adapted to rotate the common carrier 104 of the first and second planetary gear mechanisms 100, 200. This mechanism is provided with a motor 301, an external gear 302 formed on the outside peripheral face of the common carrier 104, and a gear reducer 310 linking the external gear 302 and an output shaft 303 of the motor 301. A gear 311 is attached to the reduced-speed rotation output shaft of the gear reducer 310, this gear 311 being linked to the external gear 302 via a transmission gear 312.

When the motor 301 is driven, the rotation of the output shaft 303 thereof is transmitted to the common carrier 104 via the gear reducer 310, causing the common carrier 104 to rotate at a predetermined speed in a predetermined direction. As a result, differential motion is generated between the sun gears 101, 201 of the first and second planetary gear mechanisms, 100, 200, with one of the sun gears rotating at higher speed than the other sun gear. Therefore, the upper and lower rotors 7, 8 rotate in opposite directions at a speed differential corresponding to the rotation speed of the common carrier 104. Moment force at a level dependent on the speed differential is thereby generated around the rotation axis 6, and the rotor drive unit 2 changes orientation to the direction of rotation of the rotor that is rotating at low speed, about the rotation axis 6.

Consequently, where control switches or the like for controlling the drive speed and rotation direction of the motor 301 have been disposed at positions permitting operation by the pilot, yaw control of the rotor drive unit 2 can be performed.

### (Operation mechanism)

Next, the operation mechanism of the helicopter 1 is described with reference to FIG. 3. The vertical shaft 40 (the rotor axis of rotation 6) that rotatably supports the upper rotor 7 and the lower rotor 8 is tilted by the operation mechanism longitudinally and laterally with respect to the direction of gravity of the lower airframe 5, thereby tilting the plane of blade rotation of the upper rotor 7 and the lower rotor 8, controlling the direction of forward progress of the helicopter 1. The operation mechanism of the present example is provided with the operation stick 11; the pivot joint 4 which defines a center of pivoting of the lower airframe 5; the slide unit 3 (the longitudinal slide unit 12 and the lateral slide unit 13) for sliding the rotor drive unit 2 longitudinally and laterally; and detectors 17e attached to the extensible rods 17a, for detecting the respective amount of extension of the extensible links 17.

As shown in FIG. 3, in an initial state, the rotor drive unit 2 and the lower airframe 5 are in a positional relationship such that the axis of rotation 6 of the vertical shaft 40 passes through the center of the pivot joint 4. As the helicopter 1 rises, the lower airframe 5 enters into a state of hanging from the slide unit 3, in a pivotable state about the pivot joint 4.

In this state, when the pilot P operates the operation stick 11 longitudinally or laterally, the rotor drive unit 2 and the slide unit 3 incline longitudinally or laterally about the pivot joint 4, with respect to the lower airframe 5. As a result, the vertical shaft 40 inclines longitudinally or laterally as well, and the upper rotor 7 and the lower rotor 8 also tilt with respect to a horizontal plane, whereby the direction of advance of the helicopter 1 can be controlled. When operation force on the operation stick 11 ceases to be applied, the vertical shaft 40 returns automatically to a vertical state (a direction aligned with the direction of gravity), due to the action of gravity. The helicopter 1 thereby returns to a hovering state.

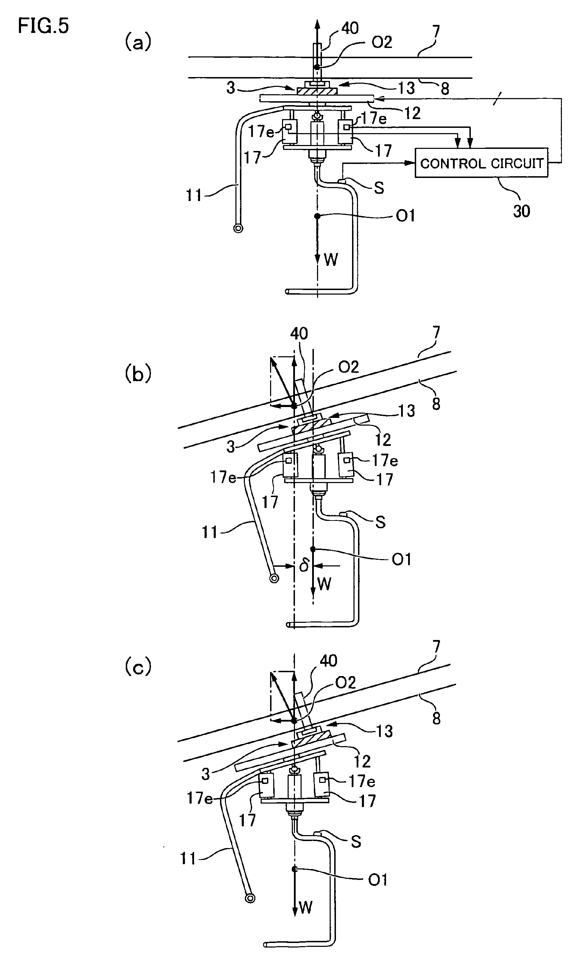

A case of behavior resulting from operation of the operation stick 11 to tilt the vertical shaft 40 is now described with reference to FIG. 5. When the operation stick 11 is operated, tilting the vertical shaft 40, the rotor shafts 71, 81 tilt. As a result, the plane of rotation of the upper rotor 7 and the lower rotor 8 which are attached to the rotor shafts 71 and 81 inclines, so that, due to a horizontal component of force in the direction of incline, the helicopter 1 can go forward in the direction of the horizontal component of force in question. In this case, due to the increase in lift associated with flight speed in the direction of advance, the operation stick 11 becomes heavier (greater operation force is needed).

As shown in FIG. 5(a), in a hovering state, the only thrust generated by rotation of the upper and lower rotors 7, 8 is an upwardly-directed vertical component (lift), and the center of gravity position O1 at which gravity W acts on the helicopter 1 is positioned on an extension line of a vertical line segment. In contrast to this, during forward flight, the upper and lower rotors 7, 8 tilt towards the direction of advance in order to generate a horizontal component towards the direction of advance. As a result, as shown in FIG. 5(b), the center point 02 of thrust generation by the upper and lower rotors 7, 8 is shifted by a predetermined amount (δ) towards the front from on a vertical line passing through the center of gravity position O1, and the operation stick 11 becomes heavier.

In the present example, on the basis of the amount of extension of the links 17 detected by the detectors 17e of the links 17, the control circuit 30 on board the helicopter 1 detects the direction of tilt and the angle of tilt of the rotor drive unit 2 and the slide unit 3 with respect to the lower airframe 5. In the case of the example of FIG. 5, tilting towards the forward direction is detected, and the angle of tilt thereof is calculated. On the basis thereof, the control circuit 30 drives the longitudinal slide unit 12, moving the rotor drive unit 2 towards the rear from the initial position, by an amount of slide depending on the angle of tilt.

As a result, as shown in FIG. 5(c), the center point 02 of thrust generated by the upper and lower rotors 7, 8 can be moved rearward, and aligned with or brought into proximity with the center of gravity position O1. In so doing, the increase in operation force of the operation stick 11 encountered during forward flight or the like can be cancelled out or minimized, so that the helicopter can be operated with a very low level of operation force. In FIG. 5, to make the description simpler, an example in the case of flying in the forward direction is described; however, the procedure in the case of flying in other directions is similar.

It is moreover acceptable to detect the operation force applied to the operation stick 11, and to control driving of the longitudinal slide unit 12 or the lateral slide unit 13 in such a way that this operation force is kept at or below a predetermined value. For example, as shown in FIG. 5, a strain indicator S may be attached to the operation stick 11, with the control circuit 30 controlling the slide position of the rotor drive unit 2 in such a way that the strain indicator S does not go above a predetermined value.

### (Second embodiment)

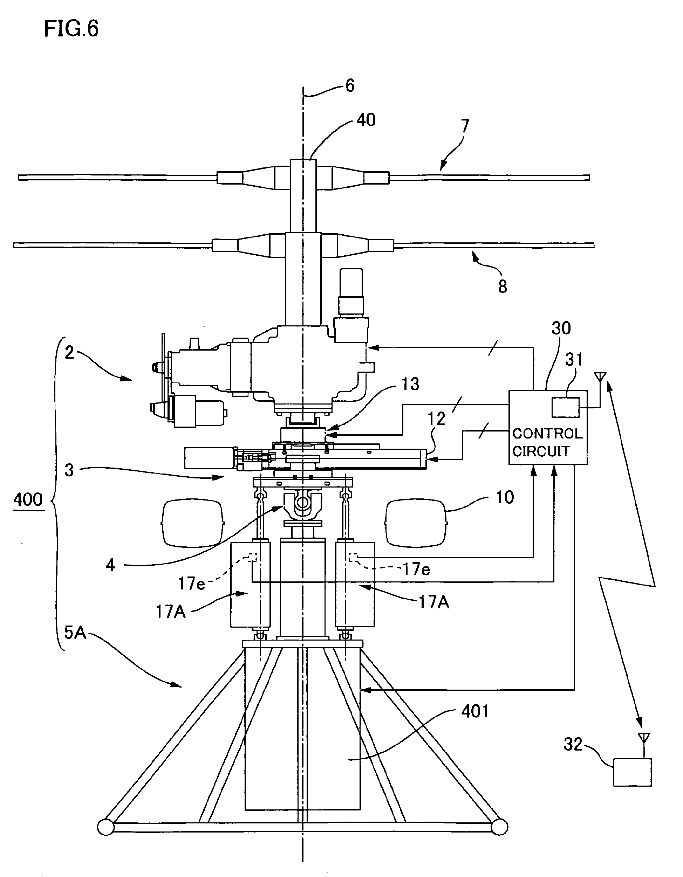

Next, FIG. 6 is a descriptive view showing a helicopter according to a second embodiment of the present invention. The helicopter 400 of the second embodiment is an unmanned, radio-operated helicopter. The basic constitution of the helicopter 400 is similar to that of the helicopter 1 of the first embodiment, and therefore corresponding parts are assigned the same symbols, omitting descriptions thereof.

In the helicopter 400 of the present example, the on-board control circuit 30 has an on-board radio transceiver section 31, permitting radio operation from the ground by a remote 32 or the like. As the operation mechanism, four extensible actuators 17A are attached in placed of the operation stick 11 and the four extensible links 17. The extensible actuators 17A are hydraulic or electric, longitudinal and lateral tilting of the rotor drive unit 2 being possible through individual extension and contraction thereof.

The lower airframe 5A hangs from the slide unit 3 via the pivot joint 4 and the four extensible actuators 17A. The lower airframe 5A has, for example, an on-board chemical agent spray device 401, making possible spraying of chemical agents by radio operation.

Like the helicopter 1 of the first embodiment, the helicopter 400 constituted in this manner has the advantage of high stability of attitude during hovering and during flight.

## Claims

1. A fixed-pitch coaxial contra-rotating helicopter (1, 400), comprising:
a rotor drive unit (2) provided with an upper rotor (7) and a lower rotor (8) rotatable in opposite directions about a common axis of rotation (6);
a slide unit (3) attached to a bottom surface of the rotor drive unit (2) for sliding the rotor drive unit (2) in an orthogonal plane direction orthogonal to the axis of rotation (6);
a lower airframe (5, 5A) hung from a bottom surface of the slide unit (3)
**characterized in that**
the lower airframe (5, 5A) is hung from a bottom surface of the slide unit (3) via a pivot joint (4),
and **in that** the helicopter (1, 400) further comprises:
at least two extensible links (17, 17A) bridging between the lower airframe (5, 5A) and the bottom surface of the slide unit (3);
detectors (17e) attached to the links (17, 17A) for detecting amounts of extension of the links (17, 17A); and
a control circuit (30) for controlling a direction of slide and an amount of slide of the rotor drive unit (2) by the slide unit (3), on the basis of detection output from the detectors (17e); wherein
on the basis of the amounts of extension of the links (17, 17A) detected by the detectors (17e), in a case in which the rotor drive unit (2) tilts about the pivot joint (4) with respect to a direction of a center of gravity of the lower airframe (5, 5A), the control circuit (30) slides the rotor drive unit (2) in a direction in which the rotor drive unit (2) is tilted, such that a vertical line that passes through the center of gravity (O1) of the lower airframe (5, 5A) moves in a direction in which it comes closer to a vertical line that passes through a center of thrust (02) generated by the rotation of the upper rotor (7) and the lower rotor (8).

2. The fixed-pitch coaxial contra-rotating helicopter (1) according to claim 1, **characterized by** comprising an operation stick (11) that is manually operated in order to tilt the rotor drive unit (2) about the pivot joint (4) with respect to the direction of the center of gravity of the lower airframe (5).

3. The fixed-pitch coaxial contra-rotating helicopter (1) according to claim 2, **characterized by** comprising an operation-force detector for detecting an operation force acting on the operation stick (11), wherein
the slide unit (3) is driven to slide the rotor drive unit (2) in such a manner that a value detected by the operation-force detector is equal to or less than a predetermined value.

4. The fixed-pitch coaxial contra-rotating helicopter (400) according to claim 1, **characterized by** comprising extensible actuators (17A) that function as the links, wherein
the control circuit (30) extends and contracts each of the extensible actuators (17A) on an individual basis, to thereby perform operation control to tilt the rotor drive unit (2) in a predetermined direction by a predetermined angle about the pivot joint (4), with respect to the direction of the center of gravity of the lower airframe (5).

## Patentansprüche

1. Koaxial-Gegenrotations-Helikopter (1, 400) mit festem Anstellwinkel, aufwei - send:
eine Rotorantriebseinheit (2), die mit einem oberen Rotor (7) und einem un - teren Rotor (8) versehen ist, die in gegenläufigen Richtungen um eine ge - meinsame Drehachse (6) drehbar sind;
eine Verschiebeeinheit (3), die an einer Bodenfläche der Rotorantriebsein - heit (2) angebracht ist, um die Rotorantriebseinheit (2) in einer orthogonalen Ebenenrichtung orthogonal zu der Drehachse (6) zu verschieben;
eine untere Zelle (5, 5A), die von einer Bodenfläche der Verschiebeeinheit (3) aufgehängt ist,
**dadurch gekennzeichnet, dass** die untere Zelle (5, 5A) von einer Bodenflä - che der Verschiebeeinheit (3) über ein Drehgelenk (4) aufgehängt ist,
und dass der Helikopter (1, 400) ferner Folgendes aufweist:
mindestens zwei ausfahrbare Verbindungsglieder (17, 17A), die den Be - reich zwischen der unteren Zelle (5, 5A) und der Bodenfläche der Verschie - beeinheit (3) überbrücken;
an den Verbindungsgliedern (17, 17A) angebrachte Detektoren (17e) zum Erfassen von Ausfahrbeträgen der Verbindungsglieder (17, 17A); und
eine Steuerschaltung (30) zum Steuern einer Verschieberichtung und eines Verschiebebetrags der Rotorantriebseinheit (2) durch die Verschiebeeinheit (3) auf der Basis des Erfassungsausgangs von den Detektoren (17e); wobei auf der Basis der von den Detektoren (17e) erfassten Ausfahrbeträge der Verbindungsglieder (17, 17A) in einem Fall, in dem sich die Rotorantriebs - einheit (2) um das Drehgelenk (4) in Bezug auf eine Richtung eines Schwerpunkts der unteren Zelle (5, 5A) neigt, die Steuerschaltung (30) die Rotorantriebseinheit (2) in einer Richtung verschiebt, in der die Rotorantriebseinheit (2) geneigt wird, so dass eine vertikale Linie, die durch den Schwerpunkt (O1) der unteren Zelle (5, 5A) hindurch geht, sich in einer Richtung bewegt, in der sie sich einer vertikalen Linie nähert, die durch ein Schubzentrum (02) hindurch geht, das durch die Rotation des oberen Ro - tors (7) und des unteren Rotors (8) erzeugt wird.

2. Koaxial-Gegenrotations-Helikopter (1) mit festem Anstellwinkel nach Anspruch 1,
**dadurch gekennzeichnet, dass** er eine Betätigungsstange (11) aufweist, die manuell betätigbar ist, um die Rotorantriebseinheit (2) um das Drehgelenk (4) in Bezug auf die Richtung des Schwerpunkts der unteren Zelle (5) zu neigen.

3. Koaxial-Gegenrotations-Helikopter (1) mit festem Anstellwinkel nach Anspruch 2,
**dadurch gekennzeichnet, dass** er einen Betätigungskraftdetektor zum Er - fassen einer auf die Betätigungsstange (11) wirkenden Betätigungskraft aufweist, wobei
die Verschiebeeinheit (3) antriebsmäßig bewegt wird, um die Rotorantriebs - einheit (2) derart zu verschieben, dass ein von dem Betätigungskraftdetek - tor erfasster Wert gleich einem oder geringer als ein vorbestimmter Wert ist.

4. Koaxial-Gegenrotations-Helikopter (400) mit festem Anstellwinkel nach An - spruch 1,
**dadurch gekennzeichnet, dass** er ausfahrbare Stellglieder (17A) aufweist, die als die Verbindungsglieder wirken, wobei
die Steuerschaltung (30) jedes der ausfahrbaren Stellglieder (17A) auf einer individuellen Basis ausfährt und einfährt, um dadurch eine Betriebssteue - rung zum Neigen der Rotorantriebseinheit (2) in einer vorbestimmten Rich - tung und um einen vorbestimmten Winkel um das Drehgelenk (4) in Bezug auf die Richtung des Schwerpunkts der unteren Zelle (5) auszuführen.

## Revendications

1. Hélicoptère coaxial contrarotatif à pas fixe (1, 400) comprenant :
une unité d'entraînement de rotor (2) munie d'un rotor supérieur (7) et d'un rotor inférieur (8) aptes à effectuer des rotations dans des directions opposées autour d'un axe de rotation commun (6) ;
une unité de coulissement (3) fixée à une surface inférieure de l'unité d'entraînement de rotor (2) pour le coulissement de l'unité d'entraînement de rotor (2) dans une direction de plan orthogonal, qui est orthogonal par rapport à l'axe de rotation (6) ;
une cellule inférieure (5, 5A) suspendue à une surface inférieure de l'unité de coulissement (3) ;
**caractérisé en ce que** la cellule inférieure (5, 5A) est suspendue à une surface inférieure de l'unité de coulissement (3) via une articulation rotoïde (4), et **en ce que** l'hélicoptère (1, 400) comprend en outre :
au moins deux bielles extensibles (17, 17A) établissant un pont entre la cellule inférieure (5, 5A) et la surface inférieure de l'unité de coulissement (3) ;
des détecteurs (17e) fixés aux bielles (17, 17A) pour détecter l'ampleur d'extension des bielles (17, 17A) ; et
un circuit de commande (30) pour commander une direction de coulissement et une ampleur de coulissement de l'unité d'entraînement de rotor (2) via l'unité de coulissement (3), sur base de la détection fournie par les détecteurs (17e) ; dans lequel
sur base de l'ampleur d'extension des bielles (17, 17A) détectée par les détecteurs (17e), dans un cas dans lequel l'unité d'entraînement de rotor (2) bascule autour de l'articulation rotoïde (4) par rapport à une direction d'un centre de gravité de la cellule inférieure (5, 5A), l'unité de commande (30) fait coulisser l'unité d'entraînement de rotor (2) dans une direction dans laquelle l'unité d'entraînement de rotor (2) bascule, d'une manière telle qu'une ligne verticale qui passe par le centre de gravité (O1) de la cellule inférieure (5, 5A) se déplace dans une direction dans laquelle elle se rapproche d'une ligne verticale qui passe par le centre de traction (02) générée par la rotation du rotor supérieur (7) et du rotor inférieur (8).

2. Hélicoptère coaxial contrarotatif à pas fixe (1) selon la revendication 1, **caractérisé par le fait qu'**il comprend un manche à balai (11) qui est actionné manuellement dans le but de faire basculer l'unité d'entraînement de rotor (2) autour de l'articulation rotoïde (4) par rapport à la direction du centre de gravité de la cellule inférieure (5).

3. Hélicoptère coaxial contrarotatif à pas fixe (1) selon la revendication 2, **caractérisé par le fait qu'**il comprend un détecteur d'actionnement/de force pour détecter un actionnement/une force agissant sur le manche à balai (11), dans lequel :
l'unité de coulissement (3) est entraînée pour faire coulisser l'unité d'entraînement de rotor (2) d'une manière telle qu'une valeur détectée par le détecteur d'actionnement/de force est égale ou inférieure à une valeur prédéterminée.

4. Hélicoptère coaxial contrarotatif à pas fixe (400) selon la revendication 1, **caractérisé par le fait qu'**il comprend des actionneurs extensibles (17A) qui jouent le rôle des bielles ; dans lequel
le circuit de commande (30) étend et contracte chacun des actionneurs extensibles (17A) sur une base individuelle pour ainsi mettre en oeuvre une commande d'actionnement pour faire basculer l'unité d'entraînement de rotor (2) dans une direction prédéterminée en formant un angle prédéterminé autour de l'articulation rotoïde (4) par rapport à la direction du centre de gravité de la cellule inférieure (5).
